Europäisches Patentamt

European Patent Office

Office européen des brevets

(11) Numéro de publication: **0 132 474**
**B1**

## (12) FASCICULE DE BREVET EUROPEEN

(45) Date de publication du fascicule du brevet: **31.08.88**

(21) Numéro de dépôt: **83401515.8**

(22) Date de dépôt: **22.07.83**

(51) Int. Cl.⁴: **A 21 C 5/00,** A 21 C 11/10,
A 21 C 3/02

(54) Appareil de laminage de pâte de farine de mais.

(43) Date de publication de la demande:
**13.02.85 Bulletin 85/07**

(45) Mention de la délivrance du brevet:
**31.08.88 Bulletin 88/35**

(84) Etats contractants désignés:
**AT BE CH DE FR GB IT LI LU NL SE**

(56) Documents cités:
**FR-A-2 190 607**
**FR-A-2 474 899**
**GB-A- 879 560**
**US-A-1 763 445**
**US-A-1 964 969**
**US-A-4 405 298**

(73) Titulaire: **NABISCO BRANDS, Inc.**
**Nabisco Brands Plaza**
**Parsippany New Jersey 07054 (US)**

(72) Inventeur: **Blain, William Alex**
**33 Lawrence Place**
**Spring Valley New York 10977 (US)**

(74) Mandataire: **Bonnetat, Christian et al**
**Cabinet PROPI Conseils 23 rue de Léningrad**
**F-75008 Paris (FR)**

Courier Press, Leamington Spa, England.

## Description

La présente invention est relative à un appareil pour former des feuilles d'une pâte de farine de maïs (masa) selon le preambule de la revendication 1 et plus particulièrement à un tel appareil dans lequel un fil métallique est utilisé pour décoller la feuille de pâte de farine de maïs des rouleaux de laminage.

Les machines de laminage de pâte de farine de maïs sont utilisées dans la fabrication de produits minces à base de maïs formés d'une pâte de farine de maïs sans levain, tels que les tortillas et les brisures de tortillas. Pendant des dizaines d'années ces machines ont compris deux rouleaux de laminage disposés au-dessous d'une trémie. La pâte de farine de maïs pressée entre les rouleaux forme une feuille qui adhère aux rouleaux. La feuille est décollée de l'un des rouleaux de laminage au moyen d'un fil métallique de sorte que la totalité de la feuille est portée par le second rouleau. Un dispositif de coupe agissant contre le second rouleau délimite des morceaux du produit dans la feuille. Un second fil de métal, de dépouillement, est prévu pour détacher la feuille de pâte et les morceaux de produits du second rouleau après l'opération de découpage. Les morceaux de produits tombent sur un transporteur d'enlèvement, mais les parties résiduelles de la feuille sont emportées avec le rouleau qui les ramène dans la trémie, par de minces cercles ajustés sur le rouleau.

Le second rouleau comporte des gorges circonférentielles espacées dans lesquelles les cercles sont disposés avec jeu. Les cercles sont formés sur place à partir de bandes ayant des extrémités adaptées pour se verrouiller ensemble de façon réglable. Les cercles formés ont un diamètre qui est légèrement inférieur à celui du rouleau de sorte qu'ils restent prisonniers dans les gorges. Les gorges sont suffisamment profondes pour permettre aux cercles de prendre des positions excentrées dans lesquelles ils font saillie hors des gorges sur une distance notable.

Au fur et à mesure que la feuille de pâte est formée entre les rouleaux de laminage, la pâte est pressée contre les cercles aussi bien que sur les surfaces cylindriques des rouleaux. Par conséquent, la feuille de pâte adhère également aux cercles. Le second fil de métal de dépouillement est enfilé à travers les cercles de manière que lorsque le fil décolle la feuille de pâte de la surface du rouleau, la feuille continue d'adhérer aux cercles et que les morceaux découpés soient séparés de la feuille et tombent sur le transporteur d'enlèvement lorsque la feuille est décollée du rouleau, mais le restant de la feuille (le résidu) est transporté par les cercles qui le ramène dans la trémie. Pendant les décades durant lesquelles ce type de machine a fonctionné, on a utilisé exclusivement comme fils métalliques de dépouillement de la corde à piano ou un fil métallique analogue de section circulaire ayant une résistance élevée à la traction. Le diamètre préféré du fil métallique est de 0,36 mm. On utilise également un fil métallique ayant un diamètre de 0,4 mm, bien que celui-ci ne dépouille pas aussi bien que le fil métallique plus mince. Pendant ces dizaines d'années d'utilisation on a constaté une quantité habituelle importante de ruptures des fils métalliques de dépouillement. Les fils utilisés pour décoller la feuille de pâte découpée des seconds rouleaux de laminage se rompent après une moyenne d'utilisation d'environ 8 heures. Les fils utilisés pour décoller la feuille de pâte des premiers rouleaux de laminage se rompent après une moyenne d'utilisation d'environ 32 heures. Chaque machine comporte deux jeux de rouleaux de laminage et par conséquent on doit remplacer en moyenne deux fils et demi par machine pendant chaque période de travail de 8 heures. Le remplacement de chaque fil nécessite de 15 à 20 minutes pendant lesquelles la machine est inactive. On perd par conséquent habituellement jusqu'à 50 minutes sur une période travail de 8 heures.

Chaque machine est par conséquent inactive en moyenne pendant 30 à 50 minutes pendant chaque période de travail de 8 heures, avec une perte résultante s'élévant jusqu'à 10% de la fabrication.

L'un des buts de la présente invention est d'apporter un perfectionnement aux appareils de laminage de pâte de farine de maïs, qui réduit de façon importante les temps de fabrication perdus qui résultent de la rupture et du remplacement des fils de décollement.

Le but de l'invention est atteint en utilisant dans le second moyen de séparation une bande plate ayant la largeur plus grand que l'épaisseur, la face large de ladite bande plate étant maintenue à plat contre la surface dudit second rouleau.

D'autres caractéristiques et avantages de l'invention apparaitront au cours de la description qui va suivre d'un mode de réalisation préféré de l'invention. Aux dessins annexés donnés uniquement à titre d'exemples:

la Fig. 1 est une vue en élévation latérale montrant l'agencement général d'un appareil de laminage de pâte de farine de maïs auquel est appliquée l'invention;

la Fig. 2 est une vue en élévation suivant la ligne 2—2 de la Fig. 1;

la Fig. 3 est une vue en coupe suivant la ligne 3—3 de la Fig. 2;

la Fig. 4 est une vue en coupe suivant la ligne 4—4 de la Fig. 1;

la Fig. 5 est une vue partielle suivant la ligne 5—5 de la Fig. 4;

la Fig. 6 est une vue suivant la ligne 6—6 de la Fig. 4;

la Fig. 7 est une vue schématique en coupe suivant la ligne 7—7 de la Fig. 2 montrant le fonctionnement d'ensemble de l'appareil de laminage de pâte de farine de maïs;

la Fig. 8 est une vue à plus grande échelle d'une partie de la Fig. 7 montrant le fil de décollement suivant l'invention en service.

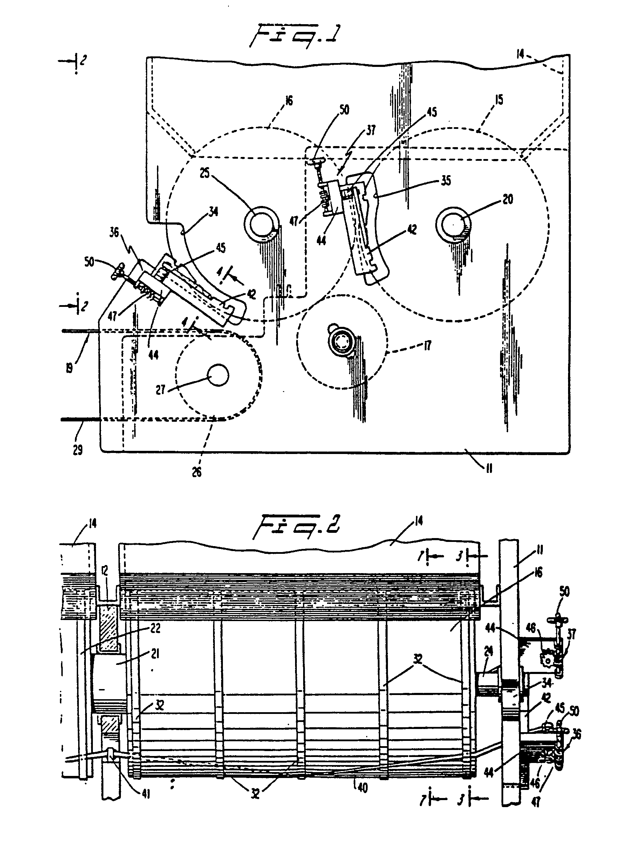

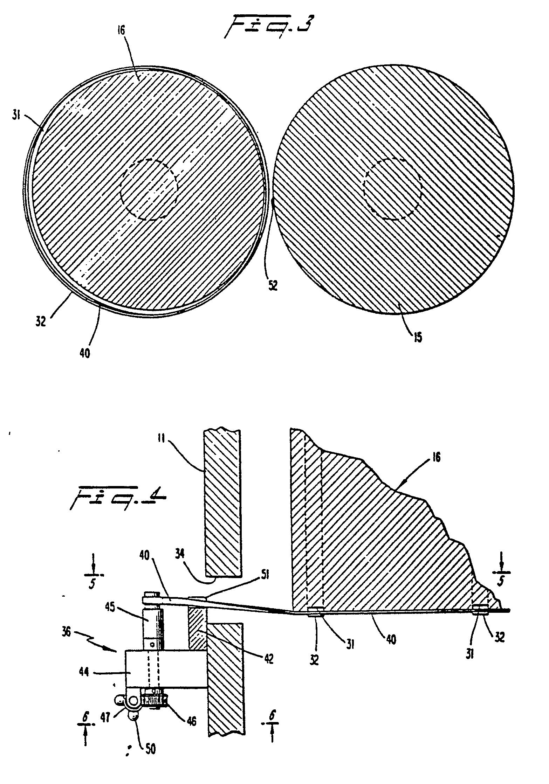

En se référant en détails au dessin, on a représenté une machine 10 de laminage de pâte de farine de maïs à laquelle est appliquée l'invention. La machine 10 est une machine double comportant deux ensembles essentiellement identiques disposées côte à côte dans un bâti unique. Dans un but de simplification on a représenté seulement un ensemble au dessin, excepté à la Fig. 2 où est représentée une partie du second ensemble. Egalement dans un but de simplification seuls sont représentés les éléments de la machine qui doivent être décrits afin d'apporter une compréhension complète de l'invention, par exemple le train d'engrenages classique utilisé pour entrainer les organes de la machine n'est pas décrit.

La machine 10 de laminage de pâte de farine de maïs comprend des flasques latéraux 11 (dont l'un rest représenté) et une plaque intermédiaire de bâti 12 (Fig. 2) qui supportent ensemble les éléments qui constituent les deux ensembles.

L'ensemble représenté comprend une trémie 14, deux rouleaux 15 et 16 pour former des feuilles, un dispositif de coupe rotatif 17, et un transporteur 19 d'enlèvement.

Le rouleau 15 comporte une surface cylindrique lisse ininterrompue et est monté sur un arbre axial qui tourillonne par une extrémité dans un roulement 20 porté par le flasque 11 du bâti et par l'autre extrémité dans un roulement (non représenté) porté par la plaque intermédiaire 12 du bâti. Le second rouleau 16 est réuni au second rouleau 22 de l'autre ensemble de laminage au moyen d'un arbre épais 21. Un arbre court 24 s'étendant depuis le rouleau 16 tourillonne dans un roulement 25 disposé dans le flasque 11. Un agencement analogue (non représenté) est prévu sur l'extrémité opposée du rouleau 22 afin de compléter le dispositif de support des deux rouleaux 16 et 22.

Le transporteur 19 comprend un rouleau 26 qui s'étend entre la plaque intermédiaire 12 du bâti et le flasque latéral 11, et tourillonne dans des roulements 27 montés dans les flasques. Un transporteur 29 à bande sans fin s'étend depuis le rouleau 26 jusqu'à un second rouleau 30 (Fig. 7) pour porter le produit jusqu'à l'opération suivante de fabrication.

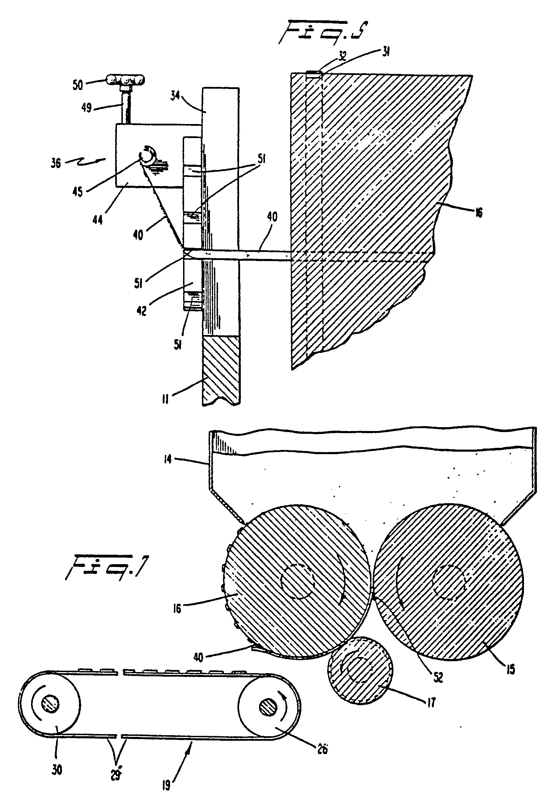

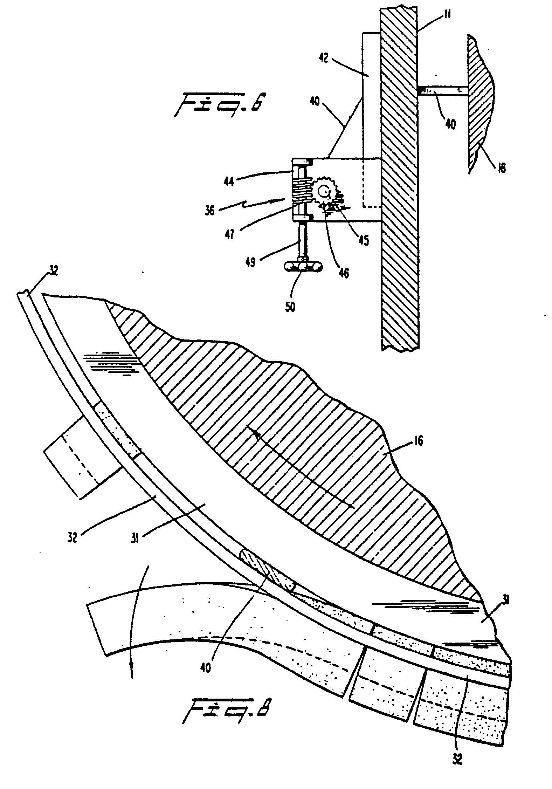

Le second rouleau 16 de laminage comporte des gorges circonférentielles espacées 31 ayant en section transversale une forme qui est dans l'ensemble rectangulaire, comme représenté à la Fig. 4. Dans chacune de ces gorges est disposé un mince cercle 32 en acier. Les cercles sont formés sur place au moyen de bandes ayant des extrémités adaptées pour se verrouiller mutuellement de façon réglable. Les cercles sont formés de façon à présenter un diametre légèrement inférieur à celui du rouleau 16 de manière qu'ils restent prisonniers dans les gorges.

Le flasque 11 comporte une échancrure 34 qui s'étend le long du bord du rouleau 16 et une ouverture 35 qui est adjacente au bord du rouleau 15. Des mécanismes 36 et 37 pour tendre le fil métallique de dépouillement sont montés sur la surface externe du flasque 11 adjacents à l'échancrure 34 et à l'ouverture 35 respectivement.

En se référant à la Fig. 2, une bande métallique 40 de dépouillement s'étend à partir d'une patte 41 fixée sur la plaque intermédiaire du bâti le long de la surface du rouleau 16 dans une spirale sur le mécanisme tendeur 36. La bande métallique 40 de dépouillement s'étend à travers les cercles 32 comme représenté aux Fig. 2, 3, 4 et 8. Au point où la bande 40 passe sous chaque cercle, le cercle fait saillie hors de la gorge 31.

Les mécanismes tendeurs 36 et 37 comprennent chacun une plaque de guidage 42, un bloc 44 qui est perpendiculaire à la plaque 42, un doigt tendeur 45 qui s'étend à travers le bloc et présente un pignon 46 entrainé par une vis sans fin qui est fixée sur son extrémité, et une vis sans fin 47 actionnée manuellement comportant un arbre 49 et une poignée 50 fixée sur celui-ci.

La plaque 42 de guidage comporte un certain nombre d'encoches 51 et lorsque la bande 40 de dépouillement est mis en place, il est disposé dans l'une de ces encoches et est ensuite enroulé autour du doigt tendeur 45. La poignée 50 est utilisée pour entrainer la vis sans fin 47 et faire tourner le doigt 45 afin de tendre le fil métallique suffisamment pour obtenir un bon effet de bépouillement, une feuille de pâte très collante nécessitant une tension plus grande qu'une feuille de pâte plus sèche.

Suivant l'invention la bande métallique 40 de dépouillement est constitué par une bande plate et est disposé de façon que la surface de grande largeur repose à plat contre la surface cylindrique du second rouleau. Suivant le mode de réalisation préféré, la bande plate est formée par laminage d'un fil métallique de section circulaire et la bande présente par conséquent des bords arrondis comme représenté à la Fig. 8.

Les encoches 51 sont agrandies pour recevoir la largeur de la bande métallique de dépouillement. La bande est disposée à plat dans les encoches 51 et est tordue à 90° avant d'être enroulée autour du doigt tendeur 45.

Une autre bande métallique plate 52 (Fig. 3) s'étend le long de la surface du premier rouleau 15 de laminage entre une fixation (non représentée) prévue sur la plaque intermédiaire 12 du bâti et le mécanisme tendeur 37. Comme réprésenté à la Fig. 7, la feuille de pâte formée par les rouleaux 15 et 16 de laminage est décollée du rouleau 15 par le fil métallique 52 de dépouillement. Le dispositif de coupe rotatif découpe des morceaux du produit dans la feuille de pâte mais les morceaux découpés et le reste de la feuille continuent cependant d'adhérer à la surface du rouleau 16 et à la surface externe des cercles 32. Comme représenté à la Fig. 8, la bande métallique 40 de dépouillement sépare les morceaux découpés du produit et le restant de la feuille de la surface du rouleau 16. Les morceaux de produit tombent sur le transporteur 19 d'enlèvement. Le restant de la feuille de pâte continue cependant d'adhérer sur la surface des cercles 32 qui dépassent de leurs gorges. Les cercles portent ainsi les résidus de la feuille de pâte en les ramenant dans la trémie.

Dans la machine de laminage 10, le rouleau 16 a un diametre d'environ 16,5 cm et une longueur d'environ 38 cm. Des bandes métalliques de décollement en acier inoxydable ayant une épaisseur de 0,25 mm et une largeur de 1,6 mm ont été montées dans la machine de laminage et cette machine a été actionnée au cours d'un essai de fonctionnement non commercial effectué dans des conditions normales de fabrication pendant une période de travail de huit heures par jour, cinq jours par semaine, pendant deux semaines. Pendant cette période de deux semaines pas un seul organe métallique de décollement ne s'est brisé ou n'a été remplacé pour une raison quelconque. Pendant un telle période, si on avait utilisé des fils métalliques de décollement de la technique antérieure, il aurait été nécéssaire de remplacer 20 fils sur les seconds rouleaux et plusieurs sur les premiers rouleaux. De plus les bandes métalliques 40 et 52 ont décollé la feuille de pâte des rouleaux 15 et 16 plus complètement que ne faisaient les cordes à piano de section circulaire de la technique antérieure.

L'invention n'est pas limitée aux machines de laminage de pâte de farine de maïs ayant des rouleaux d'une dimension particulière. D'autres machines de ce type comportent des rouleaux ayant un diametre de 20 et de 25 cm. La présente invention apporte les mêmes résultats efficaces sur des machines avec des rouleaux de ces dimensions ou plus grands.

Il ressort de ce qui précède que la présente invention apporte un perfectionnement aux appareils de laminage de feuilles de pâte de farine de maïs, qui diminue considérablement les temps perdus de fabrication qui résultent du remplacement des fils métalliques de décollement.

**Revendications**

1. Appareil pour former des feuilles d'une pâte de farine de maïs, comportant une trémie (14) pour recevoir la pâte, un premier (15) et un second (16) rouleaux entraînés, disposés au-dessous de ladite trémie (14) et étroitement rapprochés, pour former une feuille de pâte, un premier moyen de séparation (52) pour détacher ladite feuille de pâte dudit premier rouleau (15), ledit second rouleau (16) ayant des rainures circonférentiellement espacées (31) et des cercles (32) disposés de façon lâche dans lesdites rainures (31), ces cercles (32) ayant un diamètre extérieur approximativement égal à celui des portions du second rouleau (16) entre les rainures (31), un organe de coupe (17) agissant contre le second rouleau (16) pour couper ladite feuille de pâte entre les rainures (31), un transporteur d'évacuation (19), un second moyen de séparation (40) sous tension s'étendant le long de la surface du second rouleau (16) et passant à travers les cercles (32), caractérisé en ce que ledit second moyen de séparation (40) comporte une bande plate ayant la largeur plus grand que l'épaisseur, la face large de ladite bande plate étant maintenue à plat contre la surface dudit second rouleau (16).

2. Appareil selon la revendication 1, caractérisé en ce que la largeur de ladite bande (40) est environ six fois supérieure à son épaisseur.

3. Appareil selon l'une ou l'autre des revendications 1 et 2, caractérisé en ce que l'épaisseur de ladite bande (40) est d'environ 0,25 mm.

4. Appareil selon la revendication 3, caractérisé en ce que la largeur de ladite bande (40) est d'environ 1,6 mm.

5. Appareil selon la revendication 4, caractérisé en ce que ledit second rouleau (16) présente un diamètre d'au moins environ 15,2 cm.

6. Appareil selon la revendication 5, caractérisé en ce que ledit second rouleau (16) a une longueur d'au moins environ 38 cm.

7. Appareil selon la revendication 4, caractérisé en ce que ladite bande (40) présente une section qui est dans son ensemble rectangulaire avec des bords arrondis.

**Patentansprüche**

1. Vorrichtung zum Bilden von Schichten eines Maismehlteigs mit einem Trichter (14) zur Aufnahme des Teigs, einer ersten (15) une einer zweiten (16) angetriebenen Wälze, unterhalb des Trichters (14) nahe zusammen angebracht, zum Bilden einer Teigschicht, mit einem ersten Trennmittel (52) zum Ablösen der Teigschicht von der ersten Walze (15), wobei die zweite Walze (16) auf dem Umfang verteilte Rillen (31) und in loser Weise in den Rillen (31) angeordnete Kreise (32) aufweist, und wobei die Kreise (32) einen Außendurchmesser in etwa gleich dem von Teilen der zweiten Walze (16) zwischen den Rillen (31) aufweisen, mit einem gegen die zweite Walze (16) wirkenden Schneidelement (17) zum Schneiden der Teigschicht zwischen den Rillen (31), mit einem Entnahmeförderer (19), mit einem sich unter Spannung entlang der Oberfläche der zweiten Walze (16) erstreckenden und quer durch die Kreise (32) verlaufenden zweiten Trennmittel (40), dadurch gekennzeichnet, daß das zweite Trennmittel (40) ein flaches Band umfaßt, das eine größere Breite als Dicke aufweist, wobei die breite Fläche des flachen Bandes flach gegen die Oberfläche der zweiten Walze (16) gehalten wird.

2. Vorrichtung nach Anspruch 1, dadurch gekennzeichnet, daß die Breite des Bands (40) etwa sechs mal so groß wie seine Dicke ist.

3. Vorrichtung nach einem der Ansprüche 1 oder 2, dadurch gekennzeichnet, daß die Dicke des Bands (40) etwa 0,25 mm ist.

4. Vorrichtung nach Anspruch 3, dadurch gekennzeichnet, daß die Breite des Bands (40) etwa 1,6 mm ist.

5. Vorrichtung nach Anspruch 4, dadurch gekennzeichnet, daß die zweite Walze (16) einen Durchmesser von wenigstens etwa 15,2 cm aufweist.

6. Vorrichtung nach Anspruch 5, dadurch gekennzeichnet, daß die zweite Walze (16) eine Länge von wenigstens etwa 38 cm hat.

7. Vorrichtung nach Anspruch 4, dadurch gekennzeichnet, daß das Band (40) einen Querschnitt aufweist, der im wesentlichen rechteckig mit abgerundeten Rändern ist.

## Claims

1. Masa sheeting apparatus comprising a hopper (14) for receiving masa, first (15) and second (16) driven rollers positioned beneath the hopper (14) in closely spaced relationship to form a masa sheet, a first separating member (52) for separating the masa sheet from the first roller (15), the second roller (16) having spaced circumferential grooves (31) and hoops (32) loosely positioned in these grooves (31), the hoops (32) having an outside diameter approximately equal to that of the portions of the second roller (16) between the grooves (31), a cutting member (17) acting against the second roller (16) for cutting the masa sheet between the grooves (31), a take-away conveyor (19), a tensioned second separating member (40) extending along the surface of the second roller (16) and passing through the hoops (32), characterized in that the tensioned second separating member (40) comprises a flat band having the width larger than the thickness, the widthwise surface of the flat band being held flat against the surface of the second roller (16).

2. Apparatus according to claim 1, characterized in that the width of said band (40) is about six times greater than the thickness thereof.

3. Apparatus according to one of claims 1 and 2, characterized in that the thickness of said band (40) is about 0,25 mm.

4. Apparatus according to claim 3, characterized in that the width of said band (40) is about 1,6 mm.

5. Apparatus according to claim 4, characterized in that said second roller (16) is at least about 15,2 cm in diameter.

6. Apparatus according to claim 5, characterized in that said second roller (16) is at least about 38 cm long.

7. Apparatus according to claim 4, characterized in that said band (40) ha s a generally rectangular cross-section with rounded edges.

Fig.1

Fig.2

Fig.3

Fig.4

Fig.5

Fig.1

Fig.6

Fig.8